Europäisches Patentamt

European Patent Office

Office européen des brevets

(19)

(11) Veröffentlichungsnummer: **0 152 056**
**B1**

(12) **EUROPÄISCHE PATENTSCHRIFT**

(45) Veröffentlichungstag der Patentschrift:
**12.04.89**

(51) Int. Cl.⁴: **G 02 B 23/18**

(21) Anmeldenummer: **85101216.1**

(22) Anmeldetag: **06.02.85**

(54) **Doppelfernrohr mit Mitteltrieb.**

(30) Priorität: **11.02.84 DE 8404136 U**

(43) Veröffentlichungstag der Anmeldung:
**21.08.85 Patentblatt 85/34**

(45) Bekanntmachung des Hinweises auf die Patenterteilung:
**12.04.89 Patentblatt 89/15**

(84) Benannte Vertragsstaaten:
**AT CH DE FR GB IT LI**

(56) Entgegenhaltungen:
**DE-A- 2 717 573**
**DE-A- 2 950 204**
**FR-A- 2 464 488**
**US-A- 4 030 808**

(73) Patentinhaber: **Firma Carl Zeiss, D-7920 Heidenheim (Brenz) (DE)**
(84) Benannte Vertragsstaaten: **CH DE FR IT LI AT**

(73) Patentinhaber: **CARL-ZEISS-STIFTUNG trading as CARL ZEISS, D-7920 Heidenheim (Brenz) (DE)**
(84) Benannte Vertragsstaaten: **GB**

(72) Erfinder: **Altenheiner, Erwin, Fürst-Wallrad-Strasse 9, D-6331 Waldsoms-Hasselborn (DE)**
Erfinder: **Schlicht, Günther, Weingartenstrasse 25, D-6336 Solms-Oberbiel (DE)**
Erfinder: **Hornschu, Joachim, Zeppelin-Strasse 47, D-7934 Königsbronn (DE)**

## Beschreibung

Die Erfindung betrifft ein Doppelfernrohr mit Mitteltrieb nach dem Oberbegriff des Patentanspruchs 1.

Bei derartigen Fernrohren wird eine Bauweise angestrebt, die kompakt und leichtgewichtig ist und gleichzeitig eine Integration möglichst aller mechanischen und optischen Elemente im Inneren des Gehäuses erlaubt.

Die Erfindung hat sich die Aufgabe gestellt, bekannte Fernrohre dieser Art derart zu verbessern, daß bei einer schlanken Bauweise eine leichte Montage und sichere Justierung der optischen Elemente gewährleistet ist.

Diese Aufgabe wird erfindungsgemäß dadurch gelöst, daß für die Fokussierung beider Einzelfernrohre der Einstellknopf mit einer geradegeführten Mitnehmerscheibe über ein Gewinde verbunden ist, wobei in diese Mitnehmerscheibe zwei Schubstangen eingehängt sind, welche über Mitnehmerteile in die Fassungen der Fernrohrobjektive eingreifen und wobei zum Sehfehlerausgleich des Benutzers der Einstellknopf mit einem Zahnkranz versehen ist, der beim Drehen dieses Einstellknopfes ein Ritzel antreibt, welches mit einer der beiden Schubstangen drehbar verbunden ist, wodurch eines der Mitnehmerteile des Objektives einer Fernrohrhälfte über ein Gewinde axial verstellt wird.

Die Geradführung der Mitnehmerscheibe für den Einstellknopf der Fokussierung beider Fernrohrhälften besteht zweckmäßigerweise aus einem Führungsstift.

Für die Geradführung der über Mitnehmerteile mit den Objektivfassungen verbundenen Schubstangen sind vorteilhafterweise Längsnuten vorgesehen.

In einer bevorzugten Ausführungsform der Erfindung sind die Gehäuserohre der Einzelfernrohre als ineinandergreifende Halbschalen ausgebildet, die die Gelenkachse umschließen und gegen diese eine ansteigende Außenform aufweisen.

Bei einem tangentialen Verlauf der Außenflächen der Drehknöpfe zum Gehäuse der Einzelfernrohre ergibt sich eine besonders gefällige Form eines erfindungsgemäßen Doppelfernrohres.

Die mit der Erfindung erzielten Vorteile äußern sich insbesondere in der einfachen Handhabung und haptischen Bauform der Doppelfernrohre und treten insbesondere in der geringen Gelenkachsentiefe zur ansteigenden Außenform der Einzelfernrohrgehäuse in Erscheinung.

Ausführungsbeispiele der Erfindung sind in der Zeichnung dargestellt und werden im folgenden näher beschrieben. Es zeigen

Fig. 1 einen Längsschnitt durch ein erfindungsgemäßes Doppelfernrohr;

Fig. 2 einen Teilschnitt durch ein Ausführungsbeispiel der Erfindung;

Fig. 3 eine Ansicht in Richtung III auf das in Figur 2 dargestellte Ausführungsbeispiel;

Fig. 4 einen Schnitt in Richtung IV–IV des in Figur 2 dargestellten Ausführungsbeispiels.

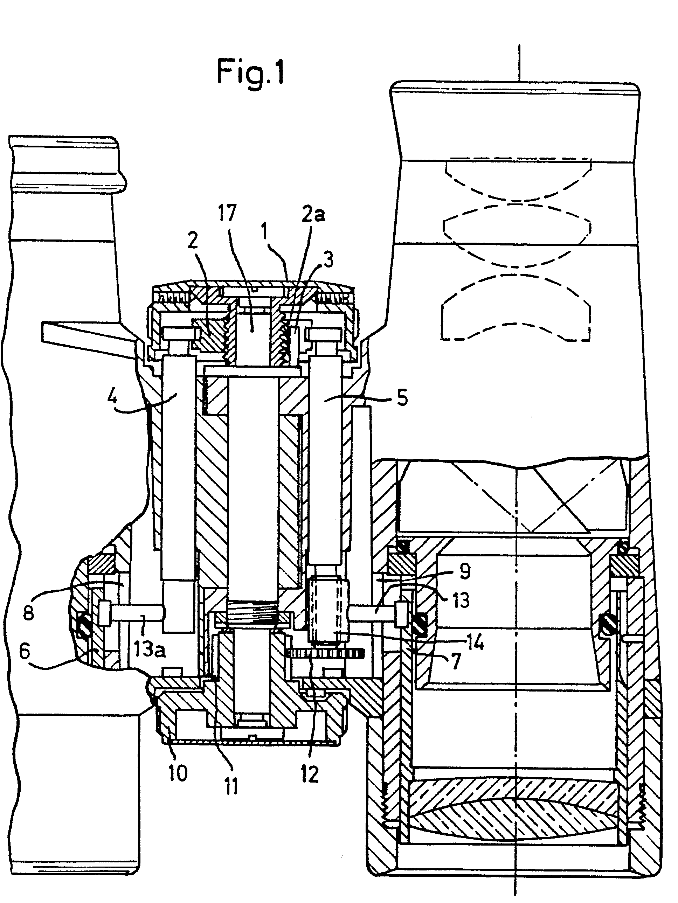

In der Darstellung des Ausführungsbeispieles nach Figur 1 ist der okularseitige Einstellknopf zur Fokussierung beider Einzelfernrohre mit 1 bezeichnet, der objektivseitige Einstellknopf zur Fokussierung des rechten Fernrohres mit 10. Die Einstellknöpfe sind an den Enden einer mittleren Führungsachse 17 gelagert. Aus der Zeichnung ist zu erkennen, daß alle mechanischen und optischen Elemente, mit Ausnahme der Einstellknöpfe, in das Innere des Gehäuses integriert sind. Die Mitteltriebfokussierung beider Fernrohre erfolgt am okularseitigen Einstellknopf 1. Durch Drehen dieses Einstellknopfes wird eine Mitnehmerscheibe 2, welche im Führungsstift 3 geradegeführt ist, durch ein Gewinde 2a axial verschoben. In die Mitnehmerscheibe 2 sind zwei Schubstangen 4 und 5 eingehängt, welche in die Objektivfassung 6 und 7 eingreifen. Die Geradeführung der Schubstangen 4 und des Mitnehmerteils 13 erfolgt in den Längsnuten 8 und 9. Die Einzelfokussierung des rechten Fernrohres erfolgt am objektivseitigen Einstellknopf 10. Durch Drehen dieses Einstellknopfes 10, der mit einem Zahnkranz 11 versehen ist, wird ein Ritzel 12, welches mit der Schubstange 5 fest verbunden ist, angetrieben. Hierbei wird das Mitnehmerteil 13 über ein Gewinde 14 axial verstellt. Beim Fokussieren des Mitteltriebes wird das Ritzel 12 im Zahnkranz 11 im Verstellbereich axial verschoben.

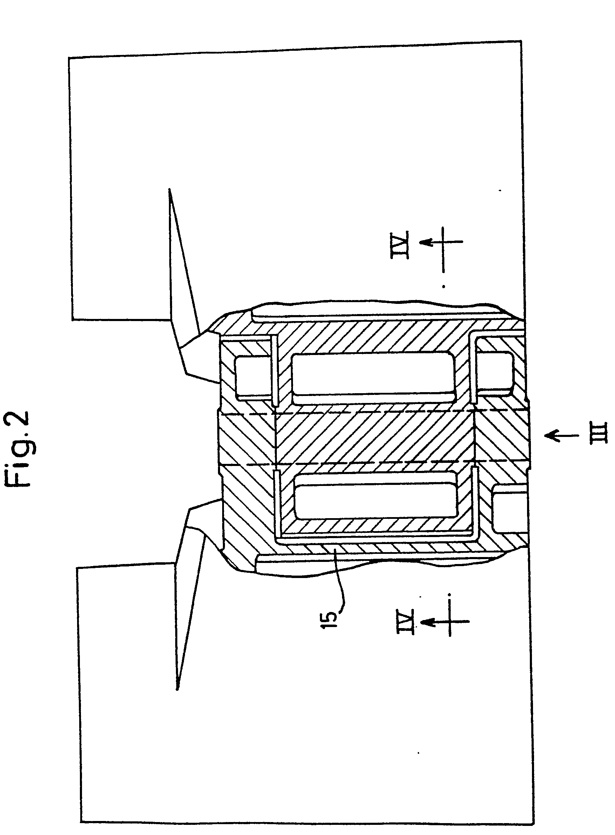

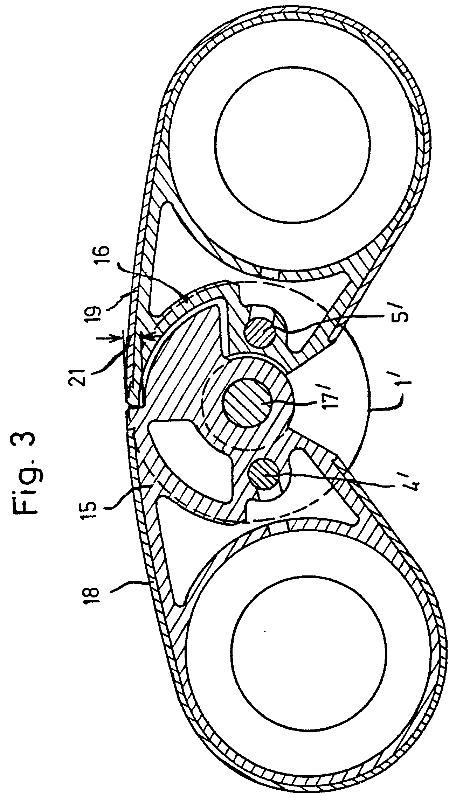

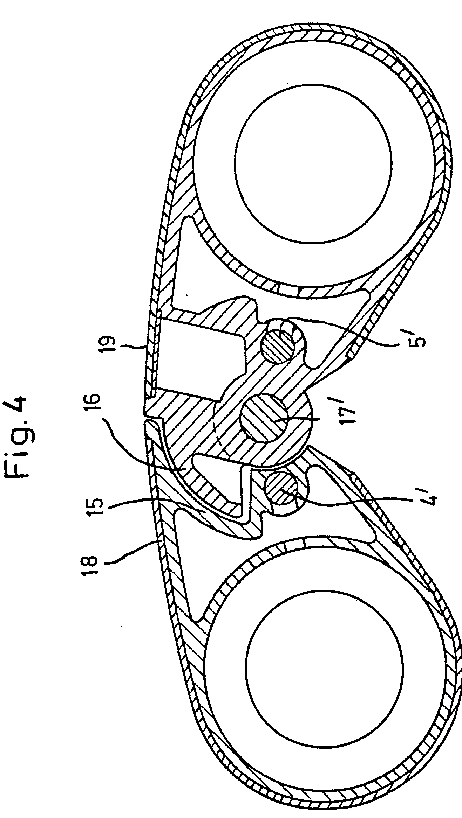

Aus dem Teilschnitt der Figur 2 geht die Gestaltung des Brückenbereiches eines Ausführungsbeispieles der Erfindung hervor, das in den Figuren 3 und 4 näher dargestellt ist. Aus der Darstellung der Figur 3 ist insbesondere die geringe Gelenkachsentiefe ersichtlich, die mit dem Pfeil 21 gekennzeichnet ist und in dem gezeigten Ausführungsbeispiel 2,5 mm oder weniger beträgt. Bei bekannten Fernrohren dieser Art beträgt diese Gelenkachsentiefe ca. 11 mm. Die Gehäuserohre der Einzelfernrohre sind als ineinandergreifende Halbschalen 15, 16 ausgebildet. Sie umschließen die zentrische Gelenkachse 17 und haben eine zentrisch ansteigende Außenform 18, 19.

## Patentansprüche

1. Doppelfernrohr mit Mitteltrieb zur Fokussierung und zum Sehfehlerausgleich und mit einer zentrischen Gelenkachse und je einer Führungsachse für jede Fernrohrhälfte, wobei die Fernrohrhälften aus einem die optischen Teile aufnehmenden Gehäuserohr und einem die Gelenkachse umfaßenden Verbindungsteil bestehen wobei ein Einstellknopf (1) für die gemeinsame Fokussierung okularseitig und ein Einstellknopf (10) für den Sehfehlerausgleich objektivseitig angebracht ist, dadurch gekennzeichnet, daß der Einstellknopf (1) für die gemeinsame Fokussierung mit einer geradegeführten Mitnehmerscheibe (2) über ein Gewinde (2a) verbunden ist, daß in die Mitnehmerscheibe (2) zwei Schubstangen (4, 5) eingehängt sind, welche über Mitnehmerteile (13, 13a) in die Fassungen (6, 7) der Fernrohrobjektive eingreifen und daß der Einstellknopf (10) zum Sehfehlerausgleich (Einzeltriebfokussierung) mit einem Zahnkranz (11) versehen ist, der beim Drehen des Einstellknopfes (10) ein Ritzel (12), welches mit einer der beiden Schubstangen (5) drehbar verbunden ist, antreibt und dadurch eines der Mitnehmerteile (13) über ein Gewinde (14) axial verstellt.

2. Doppelfernrohr nach Anspruch 1, dadurch gekennzeichnet, daß die Geradführung der Mitnehmerscheibe (2) aus einem Führungsstift (3) besteht.

3. Doppelfernrohr nach Anspruch 1, dadurch gekennzeichnet, daß die Schubstangen (4, 5) und die Mitnehmerteile (13a, 13) in Längsnuten (8, 9) geradegeführt sind.

4. Doppelfernrohr nach Anspruch 1, dadurch gekennzeichnet, daß die Gehäuserohre der Einzelfernrohre als ineinandergreifende Halbschalen (15, 16) die Gelenkachse (17) umschließen und gegen diese eine ansteigende Außenform (18, 19) aufweisen.

5. Doppelfernrohr nach Anspruch 4, dadurch gekennzeichnet, daß die Außenfläche der Einstellknöpfe (1, 10) tangential zu den Fernrohrgehäusen (18, 19) verlaufen.

## Claims

1. A binocular telescope with central control for focusing and compensation for defective vision and having a central hinge shaft and one guide shaft each for each telescope half, the telescope halves consisting of a housing tube which receives the optical parts and a connecting part which surrounds the hinge shaft and having an adjustment knob (1) for the joint focusing arranged on the eyepiece side and an adjustment knob (10) for compensating for defective vision on the objective side, characterized by the fact that the adjustment knob (1) for the joint focusing is connected via a thread (2a) with a linearly guided drive disk (2), that two push rods (4, 5) are suspended in the drive disk (2) and engage via drive parts (13, 13a) into the mounts (6, 7) of the telescope objectives, and that the adjustment knob (10) for compensating for defective vision (single-control focusing) is provided with a toothed wheel (11) which, upon the turning of the adjustment knob (10), drives a pinion (12) which is pivoted in one of the two push rods (5), thereby axially displacing one of the drive parts (13) via a thread (14).

2. A binocular telescope according to Claim 1, characterized by the fact that the linear guidance of the driver disk (2) consists of a guide pin (3).

3. A binocular telescope according to Claim 1, characterized by the fact that the push rods (4, 5) and the drive parts (13a, 13) are linearly guided in longitudinal grooves (8, 9).

4. A binocular telescope according to Claim 1, characterized by the fact that the housing tubes of the individual telescopes surround the hinge shaft (17) in the form of half shells engaging in one another and have an ascending outer shape (18, 19) towards said shaft.

5. A binocular telescope according to Claim 4, characterized by the fact that the outer surfaces of the adjustment knobs (1, 10) extend tangentially to the telescope housings (18, 19).

## Revendications

1. Paire de jumelles avec entraînement central pour la focalisation et la compensation d'erreurs de vision avec un axe central d'articulation et un axe de guidage pour chaque moitié de paire de jumelles, les moitiés de paire de jumelles se composant d'un tube boîtier recevant les parties optiques et d'une pièce de liaison qui entoure l'axe d'articulation, un bouton (1) de réglage pour la focalisation d'ensemble étant monté du côté des oculaires et un bouton (10) de réglage pour la compensation des défauts de vision étant monté du côté des objectifs, caractérisée en ce que le bouton (1) de réglage pour la focalisation d'ensemble est relié à un disque (2) d'entraînement guidé de façon rectiligne par un filetage (2a), que dans le disque (2) d'entraînement sont suspendues deux tiges coulissantes (4, 5), qui s'insèrent par des pièces (13, 13a) d'entraînement dans les montures (6, 7) des objectifs de lunette et en ce que le bouton (10) de réglage de compensation de défauts optiques (focalisation indépendante) comporte une couronne dentée (11) qui par rotation du bouton (10) de réglage actionne un pignon (12) qui est relié en rotation à l'une (5) des deux tiges coulissantes et déplace ainsi axialement l'une (13) des pièces d'entraînement par un filetage (14).

2. Paire de jumelles selon la revendication 1, caractérisée en ce que le guidage rectiligne du disque (2) d'entraînement est constitué par une broche (3) de guidage.

3. Paire de jumelles selon la revendication 1, caractérisée en ce que les tiges coulissantes (4, 5) et les pièces (13a, 13) d'entraînement sont guidées de façon rectiligne dans des rainures longitudinales (8, 9).

4. Paire de jumelles selon la revendication 1, caractérisée en ce que les tubes boîtiers des lunettes individuelles entourent l'axe d'articulation comme des demi-coquilles qui s'interpénètrent et présentent un contour extérieur croissant vers celui-ci.

5. Paire de jumelles selon la revendication 4, caractérisée en ce que la surface extérieure des boutons (1, 10) de réglage présente un tracé tangential aux boîtiers (18, 19) des boîtiers de lunette.

# Fig.1

# Fig.2

15

IV ← III → IV

EP 0 152 056 B1

Fig. 3

EP 0 152 056 B1

# Fig. 4

EP 0 152 056 B1